Europäisches Patentamt

(19) European Patent Office

Office européen des brevets

(11) Veröffentlichungsnummer: **0 074 527**
**B1**

(12) **EUROPÄISCHE PATENTSCHRIFT**

(45) Veröffentlichungstag der Patentschrift:
31.07.85

(21) Anmeldenummer: 82107747.6

(22) Anmeldetag: 24.08.82

(51) Int. Cl.⁴: **A 61 C 5/10,** A 61 C 5/08,
A 61 C 13/00

(54) Verfahren zur Anfertigung von zahntechnischen Werkstücken und Form zur Durchführung dieses Verfahrens.

(30) Priorität: 08.09.81 DE 3135469

(43) Veröffentlichungstag der Anmeldung:
23.03.83 Patentblatt 83/12

(45) Bekanntmachung des Hinweises auf die Patenterteilung:
31.07.85 Patentblatt 85/31

(84) Benannte Vertragsstaaten:
AT BE CH FR GB IT LI LU NL SE

(56) Entgegenhaltungen:
DE - A - 2 518 355
DE - C - 613 132
GB - A - 2 033 822
US - A - 1 420 940
US - A - 3 974 567

(73) Patentinhaber: Bayer, Peter, Nassauer Strasse 6,
D-6272 Niedernhausen (DE)

(72) Erfinder: Bayer, Peter, Nassauer Strasse 6,
D-6272 Niedernhausen (DE)

(74) Vertreter: Nix, Frank Arnold, Dr., Kröckelbergstrasse 15,
D-6200 Wiesbaden (DE)

**Beschreibung**

Die vorliegende Erfindung bezieht sich auf die Anfertigung von zahntechnischen Werkstücken. Dabei geht es in erster Linie um verlorene Gießmodelle für Zahnersatz oder Zahnersatzteile; jedoch können die Werkstücke auch unmittelbar den Zahnersatz oder das Zahnersatzteil, z. B. Kronen, Brücken oder Verblendungen, darstellen.

Üblicherweise wird bei der Herstellung von Zahnersatz zunächst ein verlorenes Gießmodell aus Wachs angefertigt, das in seiner Gestalt dem herzustellenden Zahnersatz entspricht (Positivmodell), worauf mit dem verlorenen Gießmodell eine Hohlform (Negativform; z. B. aus Gips) hergestellt wird, in der der Zahnersatz dann gegossen werden kann.

Das Modellieren von solchen Werkstücken im Artikulator, auch wenn es sich um verlorene Gießmodelle aus Wachs handelt, ist zeitraubend und schwierig.

Zur Arbeitserleichterung gibt es Halbfertigteile in vielen Formen und Werkstoffen. Diese sind meist die Bißfläche darstellende Plättchen, die hinterfüttert werden müssen, bis das Werkstück den Zahnstumpf umfaßt, und die entsprechend den Artikulationsbewegungen nachgearbeitet werden müssen.

Solche Halbfertigteile sollen also zum weiteren Modellieren und Adaptieren gut verformbar sein und bestehen deshalb gewöhnlich aus einem so weichen Wachs, daß die Gefahr des Schmierens besteht. Hinzu kommt, daß Halbfertigteile aus Wachs kaum verwendbar sind bei minimalen Platzverhältnissen im Kaufflächenbereich, also wenn der Abstand zwischen Zahnstumpf und Gegenbißkaufläche nur gering ist. Der Grund hierfür ist, daß bei einer Wandstärke von weniger als 0,5 mm das Modell nicht mehr stabil ist und völlig deformiert werden kann.

Besteht dagegen das Halbfertigteil aus einem festeren Kunststoff, wie es z. B. Gegenstand der DE-A-2 257 724 ist, so ist die Modellierbarkeit und Adaptierbarkeit an die individuellen Verhältnisse des Patienten stark eingeschränkt; oft kann man das Modell nicht mehr formgebend bearbeiten, sondern muß es spanabhebend bearbeiten, nämlich schleifen.

Aus der GB-A-2 033 822 ist ein Verfahren nach dem Oberbegriff des Patentanspruchs 1 bekannt. Bei diesem bekannten Verfahren dient die elastische Form als Platzhalter für das herzustellende Werkstück; nach der Abnahme vom erstarrten Werkstoff wird an ihrer Stelle das Werkstück in Form einer Außenwand aufgebracht, wobei der erstarrte Werkstoff als formgebender Träger dient. Nach Fertigstellung der das Werkstück darstellenden Außenwand wird der erstarrte Werkstoff weggeworfen.

Um zu einem verlorenen Gießmodell zu gelangen, muß zusätzlich noch ein den Zahnstumpf satt umschließendes Käppchen angefertigt werden und mit der Außenwand zu einem Hohlkörper zusammengefügt werden.

Das bekannte Verfahren ist mithin aufwendig und erfordert noch ein beträchtliches Maß an Handarbeit. Auch ist der erhaltene Hohlkörper wenig stabil und kann bei der Benutzung als verlorenes Gießmodell leicht verformt werden.

Aufgabe der Erfindung ist die Schaffung eines arbeitssparenden und weniger Mühe und Geschick erfordernden Verfahrens zur Anfertigung von zahntechnischen Werkstücken, nämlich von Zahnersatz, Zahnersatzteilen oder verlorenen Gießmodellen hierfür, die gut an die individuellen Verhältnisse an der Gebißfehlstelle angepaßt sind.

Die Lösung der gestellten Aufgabe gelingt erfindungsgemäß durch die im kennzeichnenden Teil des Patentanspruchs 1 angegebene Vorgehensweise. Bei einem solchen Vorgehen kann in erheblichem Umfang Handarbeit eingespart werden; diese ist im wesentlichen auf Nacharbeiten beschränkt.

Die Gewährleistung des genannten Abstandes geschieht zweckmäßigerweise auf die im Patentanspruch 2 angegebene Weise.

Wenn das Werkstück ein verlorenes Gießmodell ist, kommt als Werkstoff in an sich üblicher Weise Wachs oder ein rückstandslos verbrennbarer Kunststoff in Frage; wenn das Werkstück jedoch den endgültigen Zahnersatz darstellt, wird als Werkstoff ein geeignetes Zahnersatzmaterial gewählt, an das nur zusätzlich die Bedingung zu stellen ist, daß es schon bei solchen Temperaturen gießfähig sein muß, die die Form noch nicht gefährden. In Frage kommen entsprechende Kunststoffe oder Keramikwerkstoffe.

Die Form zur Durchführung des erfindungsgemäßen Verfahrens besteht aus einem gummielastischen Werkstoff und weist im Bereich der Okklusionsfläche eine in Normalenrichtung zu dieser gemessen konstante Wandstärke auf. Daß die Wandstärke in Normalenrichtung zur Okklusionsfläche konstant ist, bedeutet, daß die Wandstärke normal zur jeweiligen Oberfläche also nicht konstant ist, sondern in den parallel zur Okklusionsfläche liegenden Bereichen maximal (nämlich gleich der in Normalenrichtung zur Okklusionsfläche konstanten Wandstärke) und in den steileren Bereichen entsprechend geringer.

Zweckmäßigerweise besteht die Form aus einem Silikonkautschuk oder einem anderen geeigneten gummielastischen Werkstoff.

Die Erfindung wird nachfolgend durch die Beschreibung eines Ausführungsbeispiels anhand der Zeichnungen weiter erläutert. Es zeigt

Fig. 1 die Gesamtansicht eines aus Arbeitsmodell und Gegenbißmodell bestehenden Gebißmodells in einem Artikulator;

Fig. 2 die Form zur Herstellung des Werkstücks;

Fig. 3 die in Fig. 1 eingekreiste Einzelheit A mit auf dem Gegenbißmodell aufgesetzter Form zur Herstellung des Werkstücks;

Fig. 4 die Einzelheit A beim Aushärten des Werkstoffs;

Fig. 5 die Einzelheit A nach Abnahme der Form bei der Kontrolle des Bisses.

Das vorgeschlagene Verfahren nimmt wie üblich seinen Ausgang von dem das Gebiß des Patienten nachbildenden Gebißmodell. Der die Fehlstelle, z. B. einen zu überkronenden Zahnstumpf 3, aufweisenden Teil ist das Arbeitsmodell 1 und der andere Teil ist das Gegenbißmodell 2. Ziel der Arbeit ist die Anfertigung eines die Lücke ausfüllenden Zahnersatzes. Die Arbeiten werden, wie üblich, in einem Artikulator 4 vorgenommen, der die Kaubewegungen nachzuahmen gestattet. Im vorliegenden Fall stellt das Gegenbißmodell 2 den Unterkiefer dar und ist am festen Unterteil 5 des Artikulators befestigt, während das Oberkiefer-Arbeitsmodell 1 am beweglichen Oberteil 6 des Artikulators befestigt ist. Die weitere Beschreibung bezieht sich auf den Fall, daß als Werkstück ein verlorenes Gießmodell der Krone aus Wachs anzufertigen ist.

Zunächst wird wenigstens eines der Modelle, vorliegend das Arbeitsmodell 1, unter Zwischenlegung einer Abstandsplatte 7 mit der Dicke d am Oberteil 6 befestigt und die Okklusion zustandegebracht, d. h. das Gebiß geschlossen. Auf diese Stellung wird der Artikulator justiert. Danach wird die Abstandsplatte 7 weggenommen und das Arbeitsmodell 1 ohne diese am Oberteil 6 befestigt, so daß jetzt auf der gesamten Okklusionsfläche ein Abstand d verbleibt.

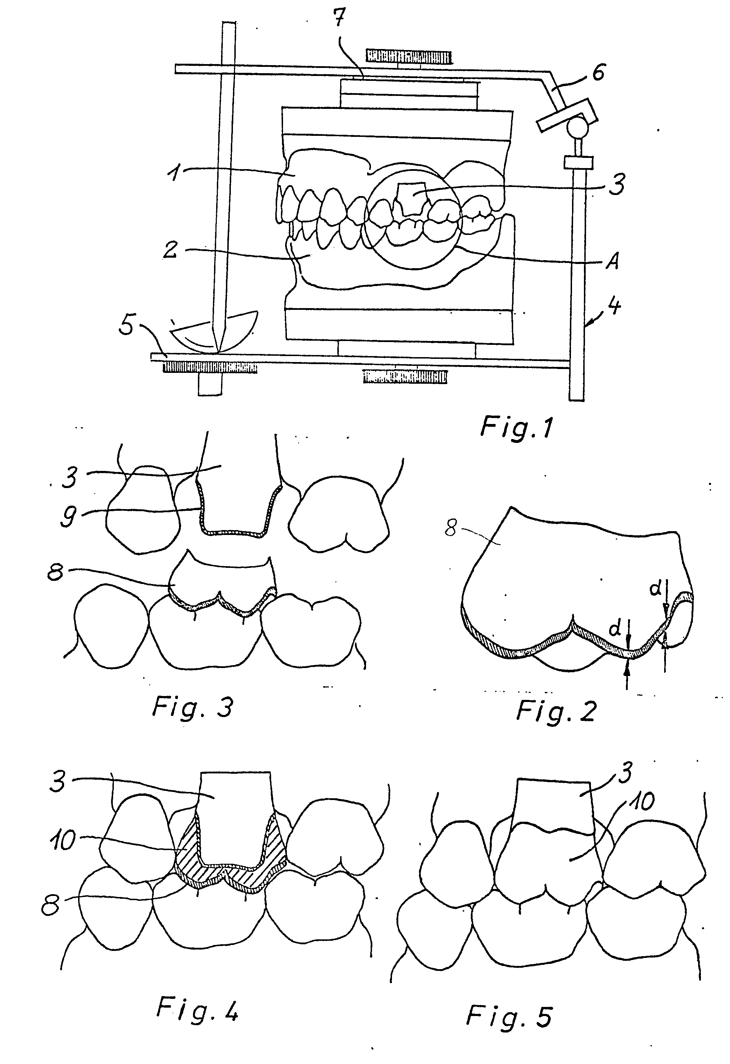

Jetzt nimmt man eine gummielastische Form 8, wie sie in Fig. 2 gezeigt ist, und setzt sie, wie in Fig. 3 gezeigt, auf die der Zahnlücke gegenüberliegende Stelle des Gegenbißmodells 2.

Die Form 8 ist ein wannenartiger Körper, dessen Boden der Kaufläche des herzustellenden Zahnersatzes nachgearbeitet ist, wobei die Reliefgestalt der Außenfläche genau der der Innenfläche entspricht. In Fig. 2 ist die Form im Bereich des Bodens geschnitten dargestellt, die Schnittfläche ist schraffiert, und es ist zu sehen, daß die obere Begrenzungskurve der Schnittfläche, die den Schnittrand an der Innenfläche darstellt, der unteren Begrenzungskurve der Schnittfläche, die den Schnittrand an der Außenfläche darstellt, genau entspricht. Man kann sich die eine Kurve dadurch aus der anderen Kurve hervorgegangen denken, daß diese parallel zu sich selbst in einer Richtung verschoben wird, die normal (d. h. rechtwinklig) zur Okklusionsfläche verläuft. Bei Betrachtung von Fig. 1 handelt es sich um die senkrechte Richtung.

Die Wandstärke der Form 8 im Bereich der Okklusionsfläche (Kaufläche) ist also nur in Normalenrichtung zur Okklusionsfläche, d. h. bei Betrachtung der Zeichnung in senkrechter Richtung konstant. Sie beträgt d und ist in Fig. 2 an zwei verschiedenen Stellen eingezeichnet. Es ist zu sehen, daß die echte Wandstärke, d. h. die in Normalenrichtung zur jeweiligen Oberfläche gemessene Wandstärke nur auf den parallel zur Okklusionsfläche liegenden (waagerechten) Abschnitten gleich d ist, während in den steileren Bereichen die Wandstärke entsprechend geringer ist.

Es versteht sich, daß die beschriebene Besonderheit des Wandstärkenverlaufs nicht bis an die senkrechten Wandabschnitte hin gelten kann, weil hier sonst die echte Wandstärke normal zur Oberfläche Null würde. In diesen von der Kaufläche entfernten Bereichen ist die Einhaltung der genannten Bedingungen auch nicht mehr wichtig bzw. die Form kann vorher enden.

Man kann auf den Zahnstumpf 3 noch ein Käppchen 9 setzen und füllt dann die Form 8 mit flüssigem Wachs und schließt den Artikulator 4. Dadurch wird das Arbeitsmodell 1 dem Gegenbißmodell 2 bis auf den Abstand d angenähert, der wegen der Wegnahme der Abstandsplatte 7 verbleibt. Dieser Zustand ist in Fig. 4 gezeigt; es ist hier am rechts von der Fehlstelle liegenden Zahnpaar zu sehen, wie der Biß nicht vollständig geschlossen ist.

Während des Erstarrens des Werkstoffs können schon Artikulationsbewegungen vorgenommen werden, so daß der Werkstoff von vornherein in einer Gestalt zum Werkstück 10 erstarrt, die den individuellen Gegebenheiten Rechnung trägt. Wegen der genauen Übereinstimmung des Verlaufs der Außenoberfläche mit dem Verlauf der Innenoberfläche im Bereich der Okklusionsfläche wird nach Abnahme der Form 8 die dabei freiwerdende Oberfläche des Werkstücks 10 genau den Verlauf haben, wie ihn die Außenoberfläche der Form 8 durch die Artikulationsbewegungen beim Erstarren des Werkstoffs angenommen hat.

Nach dem Erstarren des Werkstoffs wird die Form 8 abgenommen und dadurch das Werkstück 10 freigelegt; ebenso wird die Abstandsplatte 7 wieder eingesetzt und der Artikulator geschlossen. Dieser Zustand, in dem eine vollständige Okklusion des Gebisses gegeben ist, ist in Fig. 5 dargestellt. Bei Bedarf können jetzt noch Nacharbeiten vorgenommen werden.

## Patentansprüche

1. Verfahren zur Anfertigung von zahntechnischen Werkstücken (10), nämlich von Zahnersatz, Zahnersatzteilen oder verlorenen Gießmodellen hierfür, an einem in einem Artikulator (4) befestigten Arbeitsmodell (1) unter Zuhilfenahme eines Gegenbißmodells (2), bei dem man eine gummielastische Form (8) mit einem bildsamen Werkstoff füllt, Arbeitsmodell (1) und Gegenbißmodell (2) einander annähert, den Werkstoff erstarren läßt und die Form (8) abnimmt, dadurch gekennzeichnet, daß man eine gummielastische Form (8) verwendet, die im Bereich der Okklusionsfläche eine in Normalenrichtung zu dieser gemessen konstante Wandstärke (d) aufweist, daß man die mit dem bildsamen Werkstoff gefüllte gummielastische Form (8) auf dem Gegenbißmodell (2) an der dem Zahnstumpf (3) gegenüberliegenden Stelle anordnet, daß man die Annäherung von Arbeitsmodell (1) und Gegenbißmodell (2) durch Schließen des Artikulators (4) nur so weit vornimmt, daß bis zur Okklusion ein dieser Wandstärke (d) der Form (8) im Bereich der Okklusionsfläche entsprechender Abstand bleibt, und daß man nach Abnahme der Form (8) den erstarrten Werkstoff als Werkstück (10) weiterverwendet, indem man das Arbeitsmodell (1) dem Gegenbißmodell (2) bis zur vollständigen Okklusion annähert und den Biß kontrolliert und gegebenenfalls Nacharbeiten vornimmt.

2. Verfahren nach Anspruch 1, dadurch gekennzeichnet, daß man vorbereitend eines der Modelle (Arbeitsmodell (1) oder Gegenbißmodell (2)) unter Zwischenlegung einer Abstandsplatte (7), deren Dicke der in Normalenrichtung zur Okklusionsfläche gemessenen Wandstärke (d) der Form (8) im Bereich der Okklusionsfläche entspricht, im Artikulator (4) befestigt, die Einartikulierung der Modelle vornimmt und danach die Abstandsplatte (7) entfernt.

3. Verfahren nach Anspruch 1, dadurch gekennzeichnet, daß man als Werkstoff für das Werkstück (10) Wachs verwendet.

4. Verfahren nach Anspruch 1, dadurch gekennzeichnet, daß man als Werkstoff für das Werkstück (10) einen rückstandslos ausbrennbaren Kunststoff verwendet.

5. Verfahren nach Ansprüchen 1 oder 2, dadurch gekennzeichnet, daß man zur unmittelbaren Verwendung des Werkstücks (10) als Zahnersatz oder Zahnersatzteil als Werkstoff einen als Zahnersatzmaterial geeigneten Kunststoff oder Keramikwerkstoff nimmt.

6. Form (8) zur Durchführung des Verfahrens nach Ansprüchen 1 bis 5, dadurch gekennzeichnet, daß sie aus einem gummielastischen Werkstoff besteht und im Bereich der Okklusionsfläche eine in Normalenrichtung zu dieser gemessen konstante Wandstärke (d) aufweist.

7. Form (8) nach Anspruch 6, dadurch gekennzeichnet, daß sie aus einem Silikonkautschuk besteht.

**Claims**

1. Method for preparing dental workpieces (10), namely of dentures, denture parts, or lost moulding patterns for these, on a working model (1) being fastened in an articulator (4) with the help of a counter bite model (2), by filling a rubber elastic mould (8) with a mouldable material, bringing together the working model (1) and the counter bite model (2), allowing the material to solidify, and removing the mould (8), characterized in using a rubber elastic mould (8) having, in the area of the occlusion surface, a constant wall thickness (d) measured in the direction normal to said surface, in positioning the rubber elastic mould (8) filled with the mouldable material on the counter bite model (2) at the location opposite the tooth stump (3), in bringing together the working model (1) and the counter bite model (2) by closing the articulator (4) only to an extent that a distance corresponding to this wall thickness (d) of the mould (8) in the area of the occlusion surface remains until reaching the occlusion, and, after removing the mould (8), in using the solidified material as the workpiece (10) by bringing together the working model (1) and the counter bite model (2) until reaching a complete occlusion and checking the bite and, if necessary, performing finishing work.

2. Method according to claim 1, characterized by the preparatory step of fastening one of the models (working model (1) or counter bite model (2)) in the articulator (4) with the insertion of a spacer plate (7) having a thickness corresponding to the wall thickness (d) of the mould (8) in the area of the occlusion surface and measured in the direction normal to said surface, by bringing the models into their proper spatial relationship and adjusting the articulator to this position, and by removing the spacer plate (7) thereafter.

3. Method according to claim 1, characterized by using wax as the material for the workpiece (10).

4. Method according to claim 1, characterized by using a synthetic plastic burnable without residue as the material for the workpiece (10).

5. Method according to claim 1 or 2, characterized by using a plastic or ceramic material suitable for dental applications so that the workpiece (10) may directly be used as the denture or denture part.

6. Mould (8) for carrying out the method according to claims 1 through 5, characterized by consisting of a rubber elastic material having a constant wall thickness (d) in the area of the occlusion surface and measured in the direction normal to said surface.

7. Mould (8) according to claim 6, characterized by silicone rubber being the material.

**Revendications**

1. Procédé de fabrication de pièces de prothèse dentaire (10) notamment de dent artificielle, de parties de dent artificielle, ou de modèles d'empreintes sous forme de moulages perdus pour cellesci, à l'aide d'un modèle de travail (1) fixé dans un articulateur (4), coopérant avec un modèle de contremastication (2), selon lequel on remplit un moule présentant l'élasticité du caoutchouc (8) d'une matière plastique, on rapproche l'un de l'autre, le modèle de travail (1) et le modèle de contre-mastication (2) on laisse la matière se solidifier et on enlève le moule (8), caractérisé en ce que l'on utilise un moule présentant l'élasticité du caoutchouc (8) qui présente, dans la zone de la face d'occlusion, une épaisseur de paroi (d) constante, mesurée dans le sens perpendiculaire à cette face, en ce que l'on place le moule présentant l'élasticité du caouthcouc (8), rempli de la matière plastique sur le modèle de contre-mastication (2), à l'endroit en regard du chicot (3), en ce que l'on ne produit le rapprochement du modèle de travail (1) et du modèle de contre-mastication (2), par fermeture de l'articulateur (4) que dans une mesure telle que jusqu'à l'occlusion, il subsiste une distance correspondant à cette épaisseur de paroi (d) du moule (8) dans la zone de la face d'occlusion,
et en ce qu'après enlèvement du moule (8), on continue d'employer la matière solidifiée comme pièce (10), en rapprochant le modèle de travail (1) du modèle de contre-mastication (2) jusqu'à l'occlusion complète et en ce que l'on contrôle la mastication et effectue éventuellement des opérations de finition.

2. Procédé suivant la revendication 1, caractérisé en ce que l'on fixe préalablement dans l'articulateur (4) l'un des modèles (modèle de travail (1) ou modèle de contre-mastication (2)), en intercalant une plaque de maintien à distance (7), dont l'épaisseur correspond à l'épaisseur de paroi (d) du moule (8) mesurée dans le sens perpendiculaire à la face d'occlusion, dans la zone de la face d'occlusion, en ce que l'on produit l'articulation des modèles et en ce que l'on enlève ensuite la plaque de maintien à distance (7).

3. Procédé suivant la revendication 1, caractérisé en ce que l'on emploie de la cire comme matière pour la pièce (10).

4. Procédé suivant la revendication 1, caractérisé en ce que l'on emploie une matière synthétique combustible sans résidu comme matière pour la pièce (10).

5. Procédé suivant l'une ou l'autre des revendications 1 et 2, caractérisé en ce que pour l'utilisation directe de la pièce (10) comme dent artificielle ou comme partie de dent artificielle, on prend comme matière une matière synthétique ou une matière céramique convenant comme matière de dent artificielle.

6. Moule (8) servant à l'application du procédé suivant les revendications 1 à 5, caractérisé en ce qu'il est fait d'une matière présentant l'élasticité du caout chouc et en ce qu'il présente, dans la zone de la face d'occlusion, une épaisseur de paroi (d) constante, mesurée dans le sens perpendiculaire à cette face.

7. Moule (8) suivant la revendication 6, caractérisé en ce qu'il est fait d'un caoutchouc à la silicone.

Fig.1

Fig. 3

Fig. 2

Fig.4

Fig. 5